# EUROPEAN PATENT APPLICATION

(11) **EP 4 280 357 A1**
(43) Date of publication of application: **22.11.2023**
(21) Application number: 22189651.7
(22) Date of filing: 10.08.2022
(51) Int. Cl.: H01M 50/209, H01M 50/242, H01M 50/249, H01M 50/264, H01M 50/269, H01M 50/289, H01M 50/291, B60L 50/64

(54) **BATTERY PACK, METHOD OF ASSEMBLING BATTERY PACK AND BATTERY CLUSTER**

(30) Priority: 18.05.2022 CN 202210544425
(71) Applicant: CALB Co., Ltd., Changzhou City, Jiangsu Province (CN)
(72) Inventor: LI, Wei, Changzhou City, Jiangsu Province (CN); ZHENG, Licheng, Changzhou City, Jiangsu Province (CN); ZHU, Suran, Changzhou City, Jiangsu Province (CN); LI, Fei, Changzhou City, Jiangsu Province (CN); XIAO, Kang, Changzhou City, Jiangsu Province (CN)
(74) Representative: Becker, Eberhard

(57) **Abstract**

The disclosure relates to the technical field of batteries and provides a battery pack, a method of assembling the battery pack, and a battery cluster. The battery pack includes a battery box (10) and a battery apparatus, a buffer (30), and a first baffle plate (40) disposed in the battery box (10). The battery apparatus includes a plurality of batteries (20) stacked in a first direction. The buffer (30) is located between the first baffle plate (40) and the battery apparatus. The first baffle plate (40) is detachably connected to the battery box (10) to press the buffer (30) through moving relative to the battery box (10).

## Description

### BACKGROUND

### Technical Field

The disclosure relates to the technical field of batteries, and in particular, relates to a battery pack, a method of assembling the battery pack, and a battery cluster.

### Description of Related Art

After a plurality of batteries are stacked in a battery pack, when the batteries are pressed by a baffle plate, the batteries may move considerably. As a result, the batteries may be excessively pressed, and the performance of the battery pack is thereby affected.

### SUMMARY

The disclosure provides a battery pack, a method of assembling the battery pack, and a battery cluster in which movement of batteries is reduced when the batteries are compressed, and the performance of the battery pack is improved.

According to the first aspect of the disclosure, the disclosure provides a battery pack including a battery box, a battery apparatus, a buffer, and a first baffle plate.

The battery apparatus is disposed in the battery box, and the battery apparatus includes a plurality of batteries stacked in a first direction.

The buffer is disposed in the battery box.

The first baffle plate is disposed in the battery box, and the buffer is located between the first baffle plate and the battery apparatus.

The first baffle plate is detachably connected to the battery box to press the buffer through moving relative to the battery box.

According to the second aspect of the disclosure, the disclosure further provides a method of assembling a battery pack, and the method includes the following steps.

A buffer and a plurality of batteries are placed in a battery box, and the buffer and the batteries are stacked in a first direction.

A first baffle plate is enabled to move relative to the battery box in the first direction to press the buffer.

The first baffle plate is connected to the battery box.

According to the third aspect of the disclosure, the disclosure further provides a battery cluster including the said battery pack.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view illustrating a structure of a battery pack according to an exemplary embodiment.
FIG. 2 is a schematic view illustrating the structure of the battery pack with some batteries hidden according to an exemplary embodiment.
FIG. 3 is a schematic view one illustrating the structure of the battery pack with all batteries hidden according to an exemplary embodiment.
FIG. 4 is a schematic view two illustrating the structure of the battery pack with all batteries hidden according to an exemplary embodiment.
FIG. 5 is a schematic view three illustrating the structure of the battery pack with all batteries hidden according to an exemplary embodiment.
FIG. 6 is a schematic view illustrating a structure of a connection piece in the battery pack according to an exemplary embodiment.
FIG. 7 is a flow chart of a method of assembling a battery pack according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

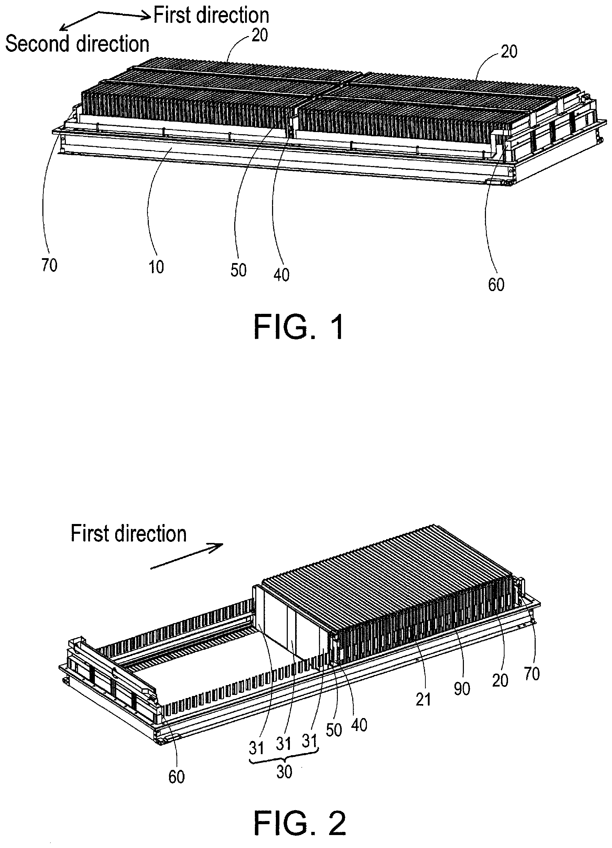

The present embodiment provides a battery pack. As shown in FIG. 1 to FIG. 2, the battery pack includes a battery box 10, a battery apparatus, a buffer 30, and a first baffle plate 40. The battery apparatus is disposed in the battery box 10, and the battery apparatus includes a plurality of batteries 20 stacked in a first direction. The buffer 30 is disposed in the battery box 10. The first baffle plate 40 is disposed in the battery box 10, and the buffer 30 is located between the first baffle plate 40 and the battery apparatus. The first baffle plate 40 is detachably connected to the battery box 10 to press the buffer 30 through moving relative to the battery box 10.

In the battery pack provided by this embodiment, by arranging the battery apparatus, the buffer 30, and the first baffle plate 40 to be located in the battery box 10, the battery box 10 may serve to provide accommodation and protection. The batteries 20 are stacked in the first direction, and the first direction is the stacking direction of the batteries 20. By arranging the buffer 30 to be located between the first baffle plate 40 and the battery apparatus, that is, the buffer 30 and the first baffle plate 40 are arranged at an end portion of the battery apparatus in the first direction, the buffer 30 may serve as an intermediate isolation between the first baffle plate 40 and the battery apparatus. The first baffle plate 40 presses the buffer 30 through moving relative to the battery box 10, and the first baffle plate 40 is not fixedly arranged but is movably arranged instead. The first baffle plate 40 presses the battery apparatus through pressing the buffer 30 to compress the battery apparatus. The buffer 30 provides a certain buffer expansion space for the battery apparatus, so when the first baffle plate 40 compresses the battery apparatus, the battery 20 adjacent to the buffer 30 is prevented from moving considerably, and the battery 20 located at the end moves only slightly. By arranging the first baffle plate 40 and the battery box 10 to be detachably connected, after the first baffle plate 40 compresses the battery apparatus, the first baffle plate 40 is connected to the battery box 10, such that the battery apparatus is fixed, and the preloading force among the batteries 20 increases.

Each battery includes a cell and an electrolyte and acts as the smallest unit capable of performing electrochemical reactions such as charging/discharging. The cell refers to a unit formed by winding or laminating a stacked part, and the stacked part includes a first electrode, a separator, and a second electrode. When the first electrode is a positive electrode, the second electrode is a negative electrode. The polarities of the first electrode and the second electrode may be interchanged.

In an embodiment, the battery 20 is a laminated battery, which may be conveniently assembled and may further be processed to obtain a battery with a longer length.

To be specific, the cell is a laminated cell. The cell has first electrode pieces that are stacked on each other, second electrode pieces whose electrical properties are opposite to the first electrode pieces, and diaphragm pieces disposed between the first electrode pieces and the second electrode pieces. Therefore, multiple pairs of the first electrode pieces and the second electrode pieces are stacked to form the laminated cell.

Optionally, the battery 20 may be a wound battery. That is, the first electrode pieces, the second electrode pieces whose electrical properties are opposite to the first electrode pieces, and the diaphragm pieces disposed between the first electrode pieces and the second electrode pieces are wound to obtain a wound cell.

In an embodiment, as shown in FIG. 1 to FIG. 2, the battery pack further includes an end insulating plate 50, and the end insulating plate 50 is disposed in the battery box 10. Herein, the buffer 30 is located between the end insulating plate 50 and the battery apparatus, and the end insulating plate 50 is located between the first baffle plate 40 and the buffer 30, or the buffer 30 is located between the first baffle plate 40 and the end insulating plate 50, and the end insulating plate 50 is located between the battery apparatus and the buffer 30.

The end insulating plate 50 may be made of insulating material, or at least one side of the end insulating plate 50 facing the battery apparatus is coated with an insulating coating, such as a ceramic material such as alumina and zirconia.

By arranging the buffer 30 to be located between the end insulating plate 50 and the battery apparatus, the end insulating plate 50 is located between the first baffle plate 40 and the buffer 30. That is, the end insulating plate 50 is arranged between the first baffle plate 40 and the battery apparatus, the end insulating plate 50 is arranged at the end portion of the battery apparatus in the first direction, and the end insulating plate 50 serves to provide isolation and protection between the end portion of the battery apparatus and the first baffle plate 40. By arranging the buffer 30 to be located between the end insulating plate 50 and the battery apparatus, when the first baffle plate 40 performs pressing, the buffer 30 is deformed, and the buffer 30 thereby provides a certain buffer space for the battery apparatus, and the compressed movement of the battery 20 adjacent to the buffer 30 is decreased.

By arranging the end insulating plate 50 to be located between the battery apparatus and the buffer 30, the buffer 30 is located between the first baffle plate 40 and the end insulating plate 50, and the buffer 30 serves to provide isolation and protection between the first baffle plate 40 and the end insulating plate 50. When the first baffle plate 40 performs pressing, the buffer 30 is deformed, so that the end insulating plate 50 is prevented from being pressed and deformed, causing the insulation failure of the end insulating plate 50. Further, since the first baffle plate 40 presses the buffer 30 first, the flange of the battery 20 may be prevented from being damaged, and the battery 20 is thereby indirectly protected.

In an embodiment, large surfaces of two adjacent batteries 20 are disposed opposite to each other, such that the first direction is perpendicular to the large surfaces of the batteries 20.

To be specific, each battery 20 is specifically a square battery, and the shape of the battery 20 is similar to a cuboid structure. The battery includes two first side surfaces and four second side surfaces, the two first side surfaces are arranged opposite to each other, the four second side surfaces are arranged between the two first side surfaces, and the four side surfaces are connected end to end. If the surface area of each first side surface is greater than the surface area of each second side surface, the first side surface is the large surface. The large surfaces of two adjacent batteries 20 are disposed opposite to each other and may be attached to each other. By setting the first direction perpendicular to the large surfaces of the battery 20, a stacking length of the battery apparatus in the first direction is saved.

In an embodiment, as shown in FIG. 2 to FIG. 3, one side of the buffer 30 facing the batteries 20 has an area a, and the large surface of the battery 20 facing the buffer 30 has an area b, and a<b. By setting the area a of the side of the buffer 30 facing the battery 20 to be less than the area b of the large surface of the battery 20 facing the buffer 30, the area of the buffer 30 is reduced and the original material of the buffer 30 is saved. Further, if the buffer 30 itself is relatively elastic, only a buffer 30 with a smaller area is required to be provided to provide the required buffering preload force.

In an embodiment, 10%<a/b<50%, specifically, a/b=15%, 20%, 25%, 30%, 35%, 40%, and 45%. 10%<a/b is set, and a/b is required to be set not to be excessively small, otherwise the required buffer space is not provided for the battery apparatus or the end insulating plate 50. a/b<50% is set, and a/b is required to be set not to be excessively large, otherwise the waste of raw materials of the buffer 30 increases and the production costs grow.

In an embodiment, the buffer 30 includes a plurality of separators 31 that are arranged at intervals. In this way, it is equivalent to cutting the integrally-formed buffer 30 into a plurality of separators 31. Compared to the buffer 30 which has a larger size, since the size of each separator 31 is smaller, the small-sized separators 31 are easier to be formed and processed, and tolerance control may also be easily performed.

In an embodiment, the separators 31 contact the large surface of the battery 20. Since the large surface of the battery 20 is the contact surface between two adjacent batteries 20 or the contact surface between the battery 20 and the end insulating plate 50, by setting the separators 31 to contact the large surface of the battery 20, the contact surface of the battery 20 may be effectively buffered.

In an embodiment, the separators 31 extend in a width direction of the large surface of the battery 20, and the separators 31 are arranged at intervals in a length direction of the large surface of the battery 20.

Since the length of the large surface of the battery 20 is longer, if the separators 31 extend in the length direction of the large surface of the battery 20, the separators 31 need to span the long side of the large surface of the battery 31. The length of each separator 31 is longer, which is not conducive to processing and fixing. By setting the separators 31 to extend in the width direction of the large surface of the battery 200, the separators 31 need to span the shorter short side of the large surface of the battery 20. The length of each separator 31 is shorter, which is conducive to the processing, shaping, and fixing of the separators 31. By arranging the plurality of separators 31 to be located at intervals in the length direction of the large surface of the battery 20, the separators 31 may cover the entire large surface of the battery 20, and the entire large surface of the battery 20 is ensured to obtain buffer space.

It can be understood that the number of the separators 31 is at least two, and the two separators 31 are arranged at intervals at two ends of the large surface of the battery 20 in the length direction of the large surface to provide a certain buffer force for the positions of the two ends.

In an embodiment, as shown in FIG. 2 to FIG. 3, one separator 31 is provided in the middle position in the length direction of the large surface of the battery 20. During the use of the battery 20, the middle of the battery 20 may protrude. By arranging the separator 31 to be located in the middle position in the length direction of the large surface of the battery 20, the separator 31 may correspond to the middle position of the battery 20. That is, the separator 31 corresponds to the protruding part in the middle of the battery 20 due to the expansion, so as to provide sufficient buffer space for the expansion of the battery 20 and to ensure the performance of the battery 20.

In an embodiment, each battery includes a terminal component 21, the terminal component 21 is disposed on the large surface of the battery 20, and the first direction is perpendicular to the large surface of the battery 20. An orthographic projection of the buffer 30 facing the large surface of the battery 20 does not overlap with the terminal component 21. By setting the orthographic projection of the buffer 30 facing the large surface of the battery 20 not to overlap with the terminal component 21, the buffer 30 and the terminal component 21 are not correspondingly arranged. When the first baffle plate 40 applies a preload force on the battery apparatus, the terminal component 21 is prevented from being damaged as the position of the terminal component 21 is pressed, and the terminal component 21 is thereby protected.

Note that the terminal component 21 includes two terminals, and the two terminals are disposed at both ends of the large surface of the battery 20 in the length direction of the large surface, and the two terminals are an anode terminal and a cathode terminal. Two adjacent batteries 20 are electrically connected through a conductive piece 90, and the conductive piece 90 is specifically a busbar or the like.

In an embodiment, as shown in FIG. 2 to FIG. 3, the battery pack further includes a second baffle plate 60. The second baffle plate 60 is connected to the battery box 10, and the buffer 30 and the battery apparatus are located between the first baffle plate 40 and the second baffle plate 60, such that the second baffle plate 60 and the buffer 30 are pressed against both ends of the battery apparatus.

By arranging the battery apparatus to be located between the first baffle plate 40 and the second baffle plate 60, both the first baffle plate 40 and the second baffle plate 60 press the battery apparatus. This is equivalent to that the battery apparatus is sandwiched between the first baffle plate 40 and the second baffle plate 60, and the first baffle plate 40 and the second baffle plate 60 are the two end plates of the battery apparatus in the first direction. Under the combined action of the first baffle plate 40 and the second baffle plate 60, the battery apparatus is pressed. By arranging the buffer 30 to be located between the first baffle plate 40 and the second baffle plate 60, when the first baffle plate 40 and the second baffle plate 60 press the battery apparatus, the buffer 60 provides a certain buffer space for the battery apparatus, so that the movement of the batteries 20 is reduced. By arranging the second baffle plate 60 to be connected to the battery box 10, the battery apparatus is ensured to be fixed.

In an embodiment, the second baffle plate 60 is fixedly connected to the battery box 10.

If the second baffle plate 60 is not fixedly arranged relative to the battery box 10, when the batteries 20 abut against the second baffle plate 60, the batteries 20 may push the second baffle plate 60 to move, which is not conducive to the pressing of the battery apparatus. By setting the second baffle plate 60 not to be movably arranged relative to the battery box 10, that is, setting the second baffle plate 60 to be fixedly arranged relative to the battery box 10, the second baffle plate 60 serves as a fixing end of the battery apparatus and acts as a fixing point for the stacking of the battery apparatus. When one of the batteries 20 abuts against the second baffle plate 60, the second baffle plate 60 serves to initially limit the battery 20. The remaining batteries 20 are then stacked in sequence in the first direction, and the positional deviation of the batteries 20 is prevented from occurring in this way.

It should be noted that the second baffle plate 60 and the battery box 10 may be fixedly connected by welding.

In an embodiment, as shown in FIG. 2 to FIG. 3, the buffer 30 is also arranged between the second baffle plate 60 and the battery apparatus. Since the second baffle plate 60 serves as the fixing end of the battery apparatus, by arranging the buffer 30 to be located between the second baffle plate 60 and the battery apparatus, when the first baffle plate 40 presses the battery apparatus, the buffer 30 serves as an intermediate isolation between the second baffle plate 60 and the battery apparatus, provides a certain buffer space for the battery apparatus, prevents rigid collision from occurring between the battery apparatus and the second baffle plate 60, and protects the battery apparatus.

In an embodiment, the battery pack further includes a third baffle plate 70. The third baffle plate 70 is connected to the battery box 10, the third baffle plate 70 is located on one side of the first baffle plate 40 away from the buffer 30, and some of the batteries 20 are disposed between the third baffle plate 70 and the first baffle plate 40.

By arranging some of the batteries 20 to be located between the third baffle plate 70 and the first baffle plate 40, the batteries 20 are sandwiched between the first baffle plate 40 and the third baffle plate 70. The first baffle plate 40 and the third baffle plate 70 are the two end plates of the batteries in the first direction, and under the combined action of the first baffle plate 40 and the third baffle plate 70, the batteries are pressed. By arranging the third baffle plate 70 to be connected to the battery box 10, the battery apparatus is fixed.

In an embodiment, some of the batteries 20 are disposed between the third baffle plate 70 and the first baffle plate 40, and the third baffle plate 70 is detachably connected to the battery box 10.

By arranging some of the batteries 20 between the third baffle plate 70 and the first baffle plate 40, the batteries 20 are stacked in the first direction to form the battery apparatus, and the batteries 20 may be compressed between the first baffle plate 40 and the third baffle plate 70. By arranging the third baffle plate 70 to be detachably connected to the battery box 10, the third baffle plate 70 is not fixedly arranged but is movably arranged instead. The third baffle plate 70 may move relative to the battery box 10 in the first direction, and the third baffle plate 70 serves as the compression end of the batteries 20 so that the battery apparatus is ensured to be pressed.

In an embodiment, the batteries 20 between the third baffle plate 70 and the first baffle plate 40 are stacked in the first direction. The buffer 30 is also provided between the third baffle plate 70 and the batteries 20, so that the third baffle plate 70 moves relative to the battery box 10 and presses the batteries 20 between the third baffle plate 70 and the first baffle plate 40 through the buffer 30.

By setting the batteries 20 between the third baffle plate 70 and the first baffle plate 40 to be stacked in the first direction, that is, some of the batteries 20 are arranged between the third baffle plate 70 and the first baffle plate 40 and the batteries 2 are stacked in the first direction, stacking of the batteries 20 between the first baffle plate 40 and the third baffle plate 70 is implemented. Since the first baffle plate 40 and the battery box 10 are fixed before the batteries 20 are placed between the third baffle plate 70 and the first baffle plate 40, when the batteries 20 are stacked in sequence in the first direction, the first baffle plate 40 is equivalent to the fixing end, and the third baffle plate 70 is equivalent to the compression end as the third baffle plate 70 moves relative to the battery box 10. Under the combined action of the first baffle plate 40 and the third baffle plate 70, the batteries 20 are ensured to be pressed. By arranging the buffer 30 to be located between the third baffle plate 70 and the batteries 20, the buffer 30 serves as an intermediate isolation between the third baffle plate 70 and the batteries 20, and the third baffle plate 70 and the batteries 20 are effectively protected. Further, the buffer 30 may provide a certain buffer space for the battery 20 adjacent to the buffer 30, so the battery 20 is prevented from moving considerably when being pressed.

It can be understood that in some embodiments, the batteries 20 between the third baffle plate 70 and the first baffle plate 40 are stacked in the second direction, and the second direction is perpendicular to the first direction. To be specific, the second direction is the length direction of the batteries 20, and herein, the third baffle plate 70 presses the batteries 20 located between the third baffle plate 70 and the first baffle plate 40 in the second direction.

It should be noted that the batteries 20 located between the third baffle plate 70 and the first baffle plate 40 and the batteries 20 located between the second baffle plate 60 and the first baffle plate 40 may be similar types of batteries or may be different types of batteries.

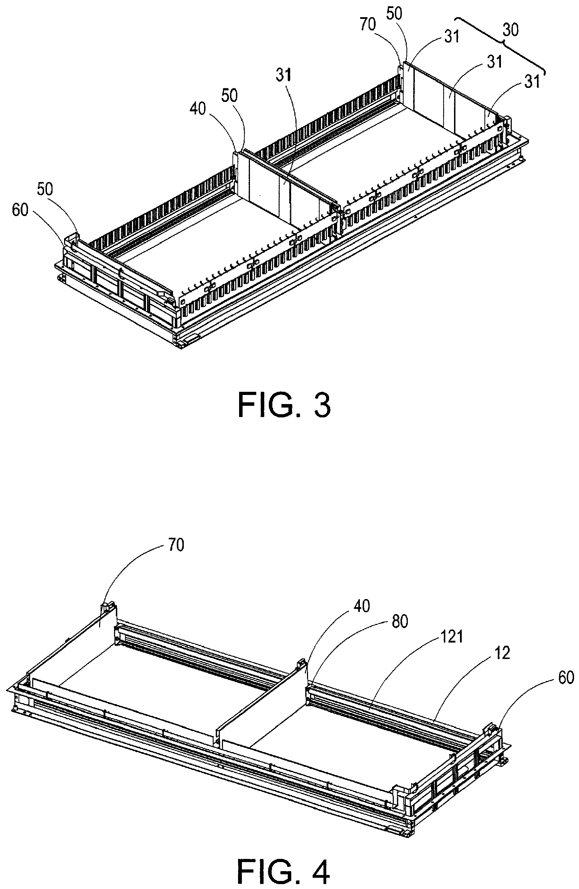

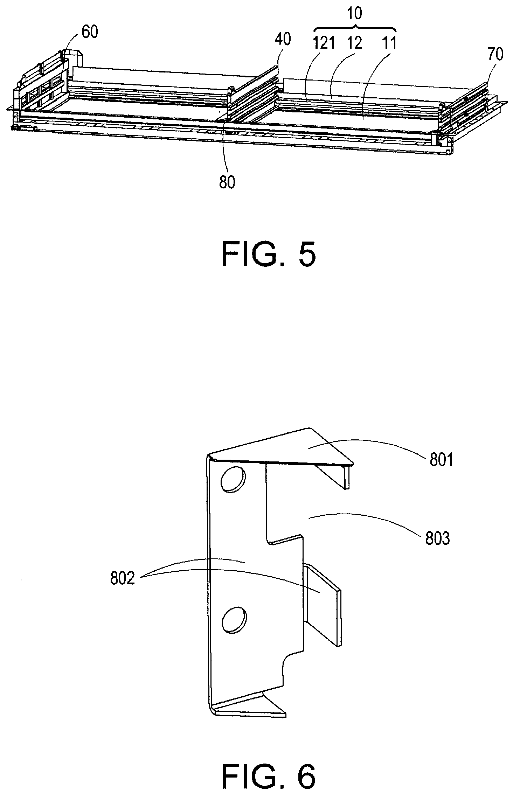

In an embodiment, as shown in FIG. 4 to FIG. 5, the battery box 10 includes a bottom plate 11 and a frame 12. The frame 12 surrounds the bottom plate 11, and the first baffle plate 40 is detachably connected to the frame 12. The bottom plate 11 is used to carry the battery apparatus, so that the battery apparatus is ensured to be supported. Through the arrangement of the frame 12 surrounding the bottom plate 11, the frame 12 serves to protect the side of the battery apparatus, and side impact or collision on the battery apparatus may thus be reduced.

It can be understood that the bottom plate 11 includes a body, a protective plate, and a liquid cooling plate that are superimposed. If the first baffle plate 40 and the bottom plate 11 are fixed, a bolt may penetrate the liquid cooling plate, and the heat dissipation effect of the battery apparatus is thereby affected. By arranging the first baffle plate 40 to be detachably connected to the frame 12, it is equivalent to borrowing the frame 12 of the battery box 10 to fix the first baffle plate 40, the first baffle plate 40 is prevented from affecting the bottom plate 11 during connection. Further, the installation difficulty of the first baffle plate 40 is reduced, both time and effort are saved, and high assembly and production efficiency may thus be provided.

In an embodiment, as shown in FIG. 4 to FIG. 5, the battery pack also includes a connection piece 80. The connection piece 80 is connected to the frame 12, and the first baffle plate 40 is connected to the connection piece 80. If the first baffle plate 40 is directly fixed to the frame 12, it is difficult to connect the first baffle plate 40 to the frame 12 because the first baffle plate 40 also needs to bear the force of the battery apparatus on the first baffle plate 40. Through arranging the connection piece 80 to be connected to the frame 12 and the first baffle plate 40 to be connected to the connection piece 80, the connection piece 80 serves as an intermediate connection between the first baffle plate 40 and the frame 12, which facilitates the fixing between the first baffle plate 40 and the frame 12. A fixing installation point is provided through the connection piece 80, and strong operability is thereby provided.

In an embodiment, the connection piece 80 is fixedly connected to the frame 12, and the first baffle plate 40 is detachably connected to the connection piece 80. Before the first baffle plate 40 is installed, the connection piece 80 is fixedly connected to the frame 12. The first baffle plate 40 only needs to be connected to the connection piece 80 to be fixed to the frame 12, so that the first baffle plate 40 may be conveniently installed and detached. Further, since the connection piece 80 is fixedly connected to the frame 12, a hole is not required to be drilled on the frame 12, and the structural strength of the frame 12 is thus not affected.

In an embodiment, one side of the first baffle plate 40 facing the battery apparatus is in limited contact with the connection piece 80. The side of the first baffle plate 40 facing the battery apparatus is connected to the connection piece 80.

It can be understood that, after the batteries 20 are placed in sequence in the first direction, the overall length of the batteries 20 in the first direction may exceed the connection piece 80. By arranging the side of the first baffle plate 40 facing the battery apparatus to be in limited contact with the connection piece 80, the connection piece 80 provides a limiting point for the first baffle plate 40. The side surface of the connection piece 80 facing the first baffle plate 40 is the position where the first baffle plate 40 is required to compress the battery apparatus in place, so as to prevent the first baffle plate 40 from applying an insufficient pressing force on the battery apparatus and thus occupying a large space or from applying an excessively large force on the battery apparatus and thus affecting the performance of the battery apparatus. By arranging the side of the first baffle plate 40 facing the battery apparatus to be connected to the connection piece 80, the battery apparatus is ensured to be fixed.

In an embodiment, the frame 12 includes a reinforcement beam 121, and the connection piece 80 is connected to the reinforcement beam 12. The reinforcement beam 121 serves to improve the structural strength of a side beam. By arranging the connection piece 80 to be connected to the reinforcement beam 121, the connection position between the connection piece 80 and the side beam is the reinforcement beam 121. The reinforcement beam 121 serves to strengthen the connection position between the connection piece 80 and the side beam, so the fixing strength of connection is improved.

To be specific, in an embodiment, as shown in FIG. 4 to FIG. 6, the connection piece 80 includes a connection plate 801 and two side arms 802. The two side arms 802 are connected by the connection plate 801, and the two side arms 802 are attached to the first baffle plate 40 and the frame 12 and the bottom plate 11 of the battery box 10. The connection piece 80 is disposed at the top corner of the battery apparatus. The first baffle plate 40, the bottom plate 11, and the frame 12 may be fixed by using one connection piece 80, it thus can be seen that a good fixing effect is provided through a simple structure.

It can be understood that, at least one of the two side arms 802 is bent in a direction approaching the bottom plate 11, so that the surface contact between the side arms 802 and the bottom plate 11 is achieved and contact area with the bottom plate 11 is increased.

Since the reinforcement beam 121 protrudes from and is disposed on the side of the frame 12 close to the battery apparatus, according to the height of the reinforcement beam 121 protruding from the frame 12 and the shape of the reinforcement beam 121, at least one of the two side arms 802 is provided with a yielding groove 803 for yielding to the reinforcement beam 121. In some embodiments, the sizes of the yielding groove 803 and the reinforcement beam 121 are matched, and in this way, the yielding groove 803 and the reinforcement beam 121 may be engaged with each other, and the fixing effect between the connection piece 80 and the frame 12 is thus further improved.

In an embodiment, the cross section of the connection plate 801 is a triangular structure, and the structural strength of the connection piece 80 is ensured by utilizing the stable characteristics of the triangular structure. Therefore, the connection piece 80 may also be called a triangle.

In order to ensure the connection effect between the first baffle plate 40 and the connection piece 80, the first baffle plate 40 is provided with a first connection hole, and the connection piece 80 is provided with a second connection hole corresponding to the first connection hole. A fastener is specifically a bolt, a screw, a rivet, etc., and the fastener is inserted in the first connection hole and the second connection hole to achieve the detachable connection between the first baffle plate 40 and the connection piece 80.

It should be noted that the structures of the first baffle plate 40 and the third baffle plate 70 are similar, and the difference is only in the positions of the first baffle plate 40 and the third baffle plate 70 relative to the battery box 10, so that detailed description of the structure of the third baffle plate 70 is not provided herein. The connection between the third baffle plate 70 and the battery box 10 may also be connected by the connection piece 80, and the specific connection form is similar to the connection between the first baffle plate 40 and the connection piece 80, so that detailed description of the specific connection between the third baffle plate 70 and the connection piece 80 is not provided herein.

The present embodiment further provides a battery cluster including the abovementioned battery pack and is suitable for various charging and discharging devices.

In the battery cluster provided by this embodiment, by arranging the battery apparatus, the buffer 30, and the first baffle plate 40 to be located in the battery box 10, the battery box 10 may serve to provide accommodation and protection. The batteries 20 are stacked in the first direction, and the first direction is the stacking direction of the batteries 20. By arranging the buffer 30 to be located between the first baffle plate 40 and the battery apparatus, that is, the buffer 30 and the first baffle plate 40 are arranged at the end portion of the battery apparatus in the first direction, the buffer 30 may serve as an intermediate isolation between the first baffle plate 40 and the battery apparatus. The first baffle plate 40 presses the buffer 30 through moving relative to the battery box 10, and the first baffle plate 40 is not fixedly arranged but is movably arranged instead. The first baffle plate 40 presses the battery apparatus through pressing the buffer 30 to compress the battery apparatus. The buffer 30 provides a certain buffer expansion space for the battery apparatus, so that when the first baffle plate 40 compresses the battery apparatus, the battery 20 adjacent to the buffer 30 is prevented from moving considerably. By arranging the first baffle plate 40 and the battery box 10 to be detachably connected, after the first baffle plate 40 compresses the battery apparatus, the first baffle plate 40 is connected to the battery box 10, such that the battery apparatus is fixed, and the preloading force among the batteries 20 increases.

In an embodiment, the battery cluster further includes an energy storage rack and at least one battery insertion box. At least one battery pack is correspondingly arranged in at least one battery insertion box, and the battery insertion box is inserted into the energy storage rack. The numbers of battery insertion box and battery pack to be placed may be adjusted according to actual use needs and the capacity of the energy storage rack.

By arranging the battery insertion box to be inserted in the energy storage rack, the advantages of convenient assembly and stable placement of the battery insertion box are provided. By correspondingly arranging the at least one battery pack to be located in the at least one battery insert box, the battery insert box provides an accommodation space for the battery pack and serves to protect and support the battery pack.

To be specific, the energy storage rack includes a frame and a placement rack, the frame includes an upright column, and the upright column is connected to the placement rack. When a plurality of battery insertion boxes are required to be placed, a plurality of spaced placement racks are connected from top to bottom on the upright column of the frame. By dividing the inner space of the frame to form a plurality of accommodation cavities by the placement racks, one battery insertion box may be inserted in one accommodation cavity, and the battery insertion box is supported by the placement rack.

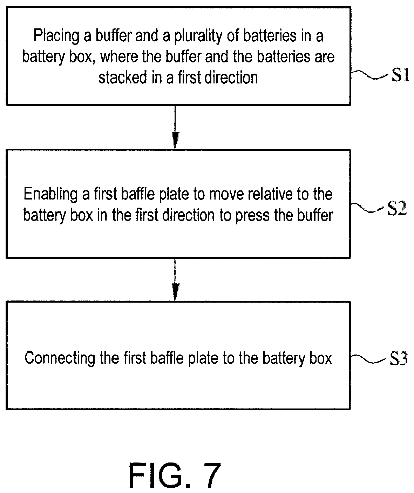

The present embodiment further provides a method of assembling a battery pack, and as shown in FIG. 7, the method includes the following steps.

In S1, the buffer 30 and the batteries 20 are placed in the battery box 10, where the buffer 30 and the batteries 20 are stacked in the first direction.

In S2, the first baffle plate 40 is enabled to move relative to the battery box 10 in the first direction to press the buffer 30.

In S3, the first baffle plate 40 is connected to the battery box 10.

In the method of assembling the battery pack provided by this embodiment, after the batteries 20 and the buffer 30 are stacked in the first direction, the first baffle plate 40 moves in a direction approaching the batteries 20 relative to the battery box 10. Herein, the first baffle plate 40 serves as the compression end, and the first baffle plate 40 may press the batteries 20 through the buffer 30, so that the batteries 20 are ensured to be pressed and stacked. The buffer 30 provides a certain buffer space for the batteries 20, so that the batteries 20 are prevented from moving considerably when being pressed. After the batteries 20 are pressed, by arranging the first baffle plate 40 to be connected to the battery box 10, the first baffle plate 40 and the battery box 10 are fixed, and preloading and fixing of the batteries 20 are achieved.

In an embodiment, the buffer 30 pushes at least one of the batteries 20 to move in the first direction. Under the pushing action of the buffer 30, the at least one battery 20 can move in the first direction, and the buffer 30 can provide a buffer space for the at least one battery 20, so that the movement of the at least one battery 20 during pressing is decreased.

In an embodiment, before the batteries 20 are stacked in the first direction, the second baffle plate 60 is fixedly connected to the battery box 10, such that both the first baffle plate 40 and the second baffle plate 60 press a first battery apparatus.

If the second baffle plate 60 is not fixedly arranged relative to the battery box 10, when the batteries 20 abut against the second baffle plate 60, the batteries 20 may push the second baffle plate 60 to move, which is not conducive to the pressing of the first battery apparatus. By setting the second baffle plate 60 not to be movably arranged relative to the battery box 10, that is, before the batteries 20 are stacked in the first direction, the second baffle plate 60 is fixedly connected to the battery box 10. The second baffle plate 60 serves as the fixing end of the first battery apparatus and acts as a fixing point for the stacking of the first battery apparatus. Herein, one of the batteries 20 abuts against the second baffle plate 60, so that the second baffle plate 60 serves to limit the battery 20. The remaining batteries 20 are then stacked in sequence in the first direction, and the positional deviation of the batteries 20 is prevented from occurring in this way. The second baffle plate 60 is the fixing end, and the first baffle plate 40 is the compression end. Under the combined action of the first baffle plate 40 and the second baffle plate 60, the second baffle plate 60 pushes the batteries 20 to move in a direction approaching the second baffle plate 60, so that the batteries 20 are ensured to contact one another, and the pressing process is thereby completed.

In an embodiment, the step of connection the first baffle plate 40 to the battery box 10 includes the following steps.

The connection piece 80 is connected to the frame 12 of the battery box 10.

The side of the first baffle plate 40 facing the first battery apparatus is in limited contact with the connection piece 80.

The first baffle plate 40 is connected to the connection piece 80.

Before the first baffle plate 40 is installed, the connection piece 80 is fixedly connected to the frame 12 first. The first baffle plate 40 only needs to be connected to the connection piece 80 to be fixed to the frame 12, so the first baffle plate 40 may be conveniently installed and detached. Further, since the connection piece 80 is fixedly connected to the frame 12, a hole is not required to be drilled on the frame 12, and the structural strength of the frame 12 is thus not affected. By arranging the side of the first baffle plate 40 facing the first battery apparatus to be in limited contact with the connection piece 80, the connection piece 80 provides a limiting point for the first baffle plate 40. The side surface of the connection piece 80 facing the first baffle plate 40 is the position where the first baffle plate 40 is required to compress the first battery apparatus in place, so as to prevent the first baffle plate 40 from applying an insufficient pressing force on the first battery apparatus and thus occupying a large space or from applying an excessively large force on the first battery apparatus and thus affecting the performance of the battery apparatus. By arranging the side of first baffle plate 40 facing the first battery apparatus to be connected to the connection piece 80, the first battery apparatus is ensured to be securely fixed.

In an embodiment, a side of the first baffle plate 40 facing away from the batteries 20 is provided with a plurality of second batteries, and the second batteries are stacked in the first direction. By arranging the plurality of second batteries to be located on the side of the first baffle plate 40 facing away from the batteries 20, the first baffle plate 40 is located between a second battery apparatus and the first battery apparatus, and the first baffle plate 40 acts as the fixing end of the second battery apparatus. Before the second battery apparatus is placed in the battery box 10, under the action of the first baffle plate 40, since the first battery apparatus is pressed. That is, the batteries 20 of the second battery apparatus are equivalent to being located outside the first battery apparatus, and the batteries 20 do not move considerably. In this way, when the baffle plate presses the battery apparatus, the outermost battery is prevented from being excessively pressed, and that the performance of the battery pack is prevented from being affected.

In an embodiment, the method of assembling the battery pack further includes the following steps.

The third baffle plate 70 is enabled to move relative to the battery box 10 in the first direction to press the second batteries.

The third baffle plate 70 is connected to the battery box 10.

By arranging the third baffle plate 70 to move relative to the battery box 10 in the first direction, the third baffle plate 70 is not fixedly arranged but is movably arranged instead. The third baffle plate 70 serves as the compression end of the second batteries 20, so that the second battery apparatus is ensured to be pressed. After the second battery apparatus is compressed, by arranging the third baffle plate 70 to be connected to the battery box 10, the second battery apparatus is fixed, and the second battery apparatus is thereby locked.

In an embodiment, after the first baffle plate 40 is connected to the battery box 10, the third baffle plate 70 is enabled to move relative to the battery box 10 in the first direction.

By arranging the first baffle plate 40 to be connected to the battery box 10, the first baffle plate 40 and the battery box 10 are fixed. By arranging the plurality of batteries 20 to be stacked in sequence in the first direction, the first baffle plate 40 serves as the fixing end. After the batteries 20 are stacked in the first direction, the third baffle plate 70 moves relative to the battery box 10 in the first direction, and the third baffle plate 70 acts as the compression end of the second battery apparatus, so that the second battery apparatus is ensured to be pressed.

In an embodiment, the method of assembling the battery pack further includes the following steps.

After the first baffle plate 40 is connected to the battery box 10,
the conductive pieces 90 are connected to the batteries 20.

If the batteries 20 are pre-connected to the conductive pieces 90 first and are then placed into the battery box 10, the conductive pieces 90 may interfere with the battery box 10, making it difficult to place the batteries 20 into the box. By connecting the conductive pieces 90 to the batteries 20 after connecting the first baffle plate 40 to the battery box 10, interference between the conductive piece 90 and the battery box 10 is prevented from occurring, the difficulty of placement into the box is lowered, and the assembly production efficiency is improved.

To be specific, each conductive piece is a busbar, and the terminals of two adjacent batteries 20 are electrically connected to each other through the conductive piece 90, so as to realize the series-parallel connection of the single batteries in the battery apparatus.

It can be understood that the conductive pieces 90 may be connected to the batteries 20 after the first baffle plate 40 is connected to the battery box 10, and the conductive pieces 90 may be connected onto the batteries 20 between the third baffle plate 70 and the first baffle plate 40 after the third baffle plate 70 is connected to the battery box 10. Alternatively, the first baffle plate 40 is connected to the battery box 10 first, and the conductive pieces 90 are connected onto all batteries 20 after the third baffle plate 70 is connected to the battery box 10, that is, the conductive pieces 90 are installed on the batteries 20 uniformly.

In an embodiment, after the conductive pieces 90 are installed, the method of assembling the battery pack further includes the following steps.

A signal acquisition apparatus is electrically connected to the battery apparatus.

An insert is inserted into the signal acquisition apparatus.

By electrically connecting the signal acquisition apparatus to the battery apparatus, performance indicators such as electric quantity and temperature of the battery apparatus may be collected, so that the battery apparatus may be detected. By inserting the insert into the signal acquisition apparatus, these performance indicators may be outputted, and monitoring may be implemented.

In an embodiment, in the method of assembling the battery pack, after the insert is inserted into the signal acquisition apparatus, box covers of the batteries 20 are connected to the battery box 10. By arranging the box covers of the batteries 20 to be connected to the battery box 10, the battery apparatus is packaged. Further, the insert and the signal acquisition apparatus are not exposed, so that isolation and protection are achieved.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery pack, comprising:
a battery box (10);
a battery apparatus, disposed in the battery box (10), wherein the battery apparatus comprises a plurality of batteries (20) stacked in a first direction;
a buffer (30), disposed in the battery box (10); and
a first baffle plate (40), disposed in the battery box (10), wherein the buffer (30) is located between the first baffle plate (40) and the battery apparatus,
wherein the first baffle plate (40) is detachably connected to the battery box (10) to press the buffer (30) through moving relative to the battery box (10).

2. The battery pack according to claim 1, further comprising:
an end insulating plate (50), disposed in the battery box (10),
wherein the buffer (30) is located between the end insulating plate (50) and the battery apparatus, and the end insulating plate (50) is located between the first baffle plate (40) and the buffer (30), or
the buffer (30) is located between the first baffle plate (40) and the end insulating plate (50), and the end insulating plate (50) is located between the battery apparatus and the buffer (30).

3. The battery pack according to claim 1, wherein large surfaces of two adjacent batteries (20) are disposed opposite to each other, such that the first direction is perpendicular to the large surfaces of the batteries (20).

4. The battery pack according to claim 3, wherein one side of the buffer (30) facing the batteries (20) has an area a, and the large surface of the battery (20) facing the buffer (30) has an area b, and a<b.

5. The battery pack according to claim 4, wherein 10%<a/b<50%.

6. The battery pack according to any one of claims 1-5, wherein the buffer (30) comprises a plurality of separators (31) that are arranged at intervals.

7. The battery pack according to claim 6, wherein the separators (31) contact the large surfaces of the batteries (20).

8. The battery pack according to claim 7, wherein the separators (31) extend in a width direction of the large surfaces of the batteries (20), and the separators (31) are arranged at intervals in a length direction of the large surfaces of the batteries (20).

9. The battery pack according to claim 8, wherein the separators (31) are arranged in the middle of the length direction of the large surfaces of the batteries (20).

10. The battery pack according to claim 1, wherein each battery (20) comprises a terminal component (21), the terminal component (21) is disposed on the large surface of the battery (20), and the first direction is perpendicular to the large surface of the battery (20),
wherein an orthographic projection of the buffer (30) facing the large surface of the battery does not overlap with the terminal component (21).

11. The battery pack according to claim 1, further comprising:
a second baffle plate (60), connected to the battery box (10), wherein the buffer (30) and the battery apparatus are located between the first baffle plate (40) and the second baffle plate (60), such that the second baffle plate (60) and the buffer (30) are pressed against both ends of the battery apparatus.

12. The battery pack according to claim 11, wherein the second baffle plate (60) is fixedly connected to the battery box (10).

13. The battery pack according to claim 12, wherein the buffer (30) is also disposed between the second baffle plate (60) and the battery apparatus.

14. The battery pack according to claim 1, further comprising:
a third baffle plate (70), connected to the battery box (10), wherein the third baffle plate (70) is located on one side of the first baffle plate (40) away from the buffer (30), and some of the batteries (20) are disposed between the third baffle plate (70) and the first baffle plate (40).

15. The battery pack according to claim 14, wherein some of the batteries (20) are disposed between the third baffle plate (70) and the first baffle plate (40), and the third baffle plate (70) is detachably connected to the battery box (10).

16. The battery pack according to claim 15, wherein the batteries (20) disposed between the third baffle plate (70) and the first baffle plate (40) are stacked in the first direction, the buffer (30) is also disposed between the third baffle plate (70) and the batteries (20), such that the third baffle plate (70) moves relative to the battery box (10), and the batteries (20) located between the third baffle plate (70) and the first baffle plate (40) are pressed through the buffer (30).

17. The battery pack according to claim 1, wherein the battery box (10) comprises:
a bottom plate (11); and
a frame (12), arranged around the bottom plate (11), wherein the first baffle plate (40) is detachably connected to the frame (12).

18. A method of assembling a battery pack, comprising:
placing a buffer (30) and a plurality of batteries (20) in a battery box (10), wherein the buffer (30) and the batteries (20) are stacked in a first direction;
enabling a first baffle plate (40) to move relative to the battery box (10) in the first direction to press the buffer (30); and
connecting the first baffle plate (40) to the battery box (10).

19. The method of assembling the battery pack according to claim 18, wherein the buffer (30) pushes at least one of the batteries (20) to move in the first direction.

20. The method of assembling the battery pack according to claim 18, further comprising:
after connecting the first baffle plate (40) to the battery box (10),
connecting conductive pieces to the batteries (20).

21. A battery cluster, comprising the battery pack according to any one of claims 1-17.

## Amended claims

### Amended claims in accordance with Rule 137(2) EPC.

1. A battery pack, comprising:
a battery box (10);
a battery apparatus, disposed in the battery box (10), wherein the battery apparatus comprises a plurality of batteries (20) stacked in a first direction;
a buffering member (30), disposed in the battery box (10);
a first baffle plate (40), disposed in the battery box (10), wherein the buffering member (30) is located between the first baffle plate (40) and the battery apparatus;
an end insulating plate (50), disposed in the battery box (10); and
a second baffle plate (60), connected to the battery box (10), wherein the buffering member (30) and the battery apparatus are located between the first baffle plate (40) and the second baffle plate (60), such that the second baffle plate (60) and the buffering member (30) are pressed against both ends of the battery apparatus,
wherein the first baffle plate (40) is detachably connected to the battery box (10) to press the buffering member (30) through moving relative to the battery box (10),
wherein the buffering member (30) is located between the end insulating plate (50) and the battery apparatus, and the end insulating plate (50) is located between the first baffle plate (40) and the buffering member (30), or
the buffering member (30) is located between the first baffle plate (40) and the end insulating plate (50), and the end insulating plate (50) is located between the battery apparatus and the buffering member (30).

2. The battery pack according to claim 1, wherein large surfaces of two adjacent batteries (20) are disposed opposite to each other, such that the first direction is perpendicular to the large surfaces of the batteries (20).

3. The battery pack according to claim 2, wherein one side of the buffering member (30) facing the batteries (20) has an area a, and the large surface of the battery (20) facing the buffering member (30) has an area b, and a<b.

4. The battery pack according to claim 3, wherein 10% < a/b < 50%.

5. The battery pack according to any one of claims 1-4, wherein the buffering member (30) comprises a plurality of separated parts (31) that are arranged at intervals.

6. The battery pack according to claim 5, wherein the separated parts (31) contact large surfaces of the batteries (20).

7. The battery pack according to claim 6, wherein the separated parts (31) extend in a width direction of the large surfaces of the batteries (20), and the separated parts (31) are arranged at intervals in a length direction of the large surfaces of the batteries (20).

8. The battery pack according to claim 7, wherein the separated parts (31) are arranged in the middle of the length direction of the large surfaces of the batteries (20).

9. The battery pack according to claim 1, wherein each battery (20) comprises a terminal component (21), the terminal component (21) extends from and connects a large surface of the battery (20), and the first direction is perpendicular to the large surface of the battery (20),
wherein an orthographic projection of the buffering member (30) facing the large surface of the battery does not overlap with the terminal component (21).

10. The battery pack according to claim 1, wherein the second baffle plate (60) is fixedly connected to the battery box (10).

11. The battery pack according to claim 10, wherein the buffering member (30) is also disposed between the second baffle plate (60) and the battery apparatus.

12. The battery pack according to claim 1, further comprising:
a third baffle plate (70), connected to the battery box (10), wherein the third baffle plate (70) is located on one side of the first baffle plate (40) away from the buffering member (30), and some of the batteries (20) are disposed between the third baffle plate (70) and the first baffle plate (40).

13. The battery pack according to claim 12, wherein some of the batteries (20) are disposed between the third baffle plate (70) and the first baffle plate (40), and the third baffle plate (70) is detachably connected to the battery box (10).

14. The battery pack according to claim 13, wherein the batteries (20) disposed between the third baffle plate (70) and the first baffle plate (40) are stacked in the first direction, the buffering member (30) is also disposed between the third baffle plate (70) and the batteries (20), such that the third baffle plate (70) moves relative to the battery box (10), and the batteries (20) located between the third baffle plate (70) and the first baffle plate (40) are pressed through the buffering member (30).

15. The battery pack according to claim 1, wherein the battery box (10) comprises:
a bottom plate (11); and
a frame (12), arranged around the bottom plate (11), wherein the first baffle plate (40) is detachably connected to the frame (12).

16. A method of assembling a battery pack, comprising:
placing a buffering member (30) and a plurality of batteries (20) in a battery box (10), wherein the buffering member (30) and the batteries (20) are stacked in a first direction;
enabling a first baffle plate (40) to move relative to the battery box (10) in the first direction to press the buffering member (30);
connecting the first baffle plate (40) to the battery box (10);
disposing an end insulating plate (50) in the battery box (10), wherein the buffering member (30) is located between the end insulating plate (50) and the plurality of batteries (20), and the end insulating plate (50) is located between the first baffle plate (40) and the buffering member (30), or the buffering member (30) is located between the first baffle plate (40) and the end insulating plate (50), and the end insulating plate (50) is located between the plurality of batteries (20) and the buffering member (30); and
connecting a second baffle plate (60) to the battery box (10), wherein the buffering member (30) and the plurality of batteries (20) are located between the first baffle plate (40) and the second baffle plate (60).

17. The method of assembling the battery pack according to claim 16, wherein the buffering member (30) pushes at least one of the batteries (20) to move in the first direction.

18. The method of assembling the battery pack according to claim 16, further comprising:
after connecting the first baffle plate (40) to the battery box (10),
connecting conductive pieces to the batteries (20).

19. A battery cluster, comprising the battery pack according to any one of claims 1-15.
